# EUROPEAN PATENT APPLICATION

(11) **EP 4 119 916 A1**
(43) Date of publication of application: **18.01.2023**
(21) Application number: 21764661.1
(22) Date of filing: 15.02.2021
(51) Int. Cl.: G01L 19/00

(54) **PRESSURE SENSOR**

(30) Priority: 05.03.2020 JP 2020037982
(71) Applicant: TDK Corporation, Tokyo 103-6128 (JP)
(72) Inventor: SASAHARA Tetsuya, Tokyo 103-6128 (JP); UNNO Ken, Tokyo 103-6128 (JP); KOBAYASHI Masanori, Tokyo 103-6128 (JP); NAWAOKA Kohei, Tokyo 103-6128 (JP)
(74) Representative: Epping - Hermann - Fischer
(86) International application number: PCT/JP2021/005558
(87) International publication number: WO 2021/177014

(57) **Abstract**

[Problem] To provide a pressure sensor that facilitates connection for extracting an output signal from a sensor unit. [Solution] A pressure sensor comprising a sensor unit 30 comprising a strain detection unit 32 for detecting deformation associated with pressure, a battery 34 for supplying power to the strain detection unit 32, and a light-emitting element 36 for changing the output of light emitted into space according to an output signal from the strain detection unit 32.

## Description

### Technical Field

The present invention relates to a pressure sensor using a strain gauge or the like

### Background

In a conventional pressure sensor, a connector or a terminal is used for extracting an output signal of the sensor to the outside. In the pressure sensor shown in Patent Document 1 below, for example, instead of a connector, a spring terminal is used for connecting an output terminal of the sensor to an outer pin.

When a connector is used for connection to the sensor, tension is applied to the wiring at the time of connection, and the wiring may be torn. In the case of a spring, a contact is poor even if the position is merely slightly displaced, and an output signal may not be able to be extracted to the outside. In addition, a physical force is applied to a connector or a spring pin, and they can thus be damaged during setting.

In any case, it is necessary to set an outer housing including an external connector to a sensor and perform an engagement in consideration of an inner terminal at the same time, and this operation is complicated. Patent Document 2 below proposes a pressure sensor using a wireless communication module.

In the pressure sensor using the wireless communication module, however, a pairing operation between a transmitting-side wireless device and a receiving-side wireless device is necessary, and this also takes time and effort for installation operation.

### Prior Arts

### Patent Document

Patent Document 1: JP2018151192 (A)
Patent Document 2: JP2017181493 (A)

### Summary of Invention

### Problems to be solved by Invention

The present invention has been achieved under such circumstances. It is an object of the invention to provide a pressure sensor for easy connection operation for extracting an output signal from a sensor unit.

### Means for solving the Problem

To achieve the above-mentioned object, a pressure sensor according to the present invention comprises a sensor unit including:
a strain detection unit for detecting a deformation corresponding to pressure;
an electric power supply means for supplying an electric power to the strain detection unit; and
a light emitting element capable of changing an output of a light radiated into space in response to an output signal of the strain detection unit.

In the pressure sensor according to the present invention, the output of the light radiated from the light emitting element into the space changes in response to the output signal of the strain detection unit. Since the change in the output of the light is detected by the light receiving element, the output signal detected by the strain detection unit can be easily extracted to the outside. Moreover, since the light receiving element is merely disposed corresponding to the light emitting element, the electrical wiring from the sensor unit is unnecessary. Moreover, since it is unnecessary to use a wireless communication module, no pairing operation or the like is also necessary, and the connection operation for extracting the output signal from the sensor unit is remarkably easy.

The electric power supply means may include a piezoelectric element. In this case, preferably, the piezoelectric element is attached together with the strain detection unit to be able to supply an electric power generated by the deformation corresponding to pressure to the strain detection unit. In this configuration, an electromotive force due to deformation is generated in the piezoelectric element at the timing when the strain detection unit detects a deformation based on pressure, and an electric power is supplied from the piezoelectric element to the strain detection unit. As a result, low power consumption becomes possible.

The electric power supply means may include a non-contact power receiving coil. In this case, preferably, the non-contact power receiving coil is constructed to receive an electric power and supply the electric power to the strain detection unit. The electric power supply means is not limited and is, for example, a battery, a charger, or the like. The electric power supply means may be a non-contact power receiving coil. Moreover, the electric power supply means may include a circuit for adjusting a voltage or the like supplied to the strain detection unit.

The electric power supply means may further include: a power storage element; and a switching means for selecting a power source for storing an electric power in the power storage element. In this case, preferably, the power storage element is constructed to supply the electric power stored therein to the strain detection unit.

When the switching means is used, for example, various electric power generation elements can be used as a backup power source for the battery. For example, the strain detection unit may be operated by an energy harvesting element during normal operation, and the strain detection unit may be operated by switching to the battery or a wireless power supply during insufficient power generation.

The pressure sensor according to the present invention may further comprise:
an auxiliary strain detection unit disposed together with the strain detection unit; and
an auxiliary light emitting element capable of changing an output of a light radiated into space in response to an output signal of the auxiliary strain detection unit.

The detection accuracy for pressure is improved by detecting the strain (deformation) using the plurality of strain detection units. Instead, the detection range can also be expanded by detecting the strain (deformation) using the plurality of strain detection units.

The pressure sensor according to the present invention may further comprise a partition wall disposed between the light emitting element and the auxiliary light emitting element. When the partition wall is provided, it is possible to prevent the interference of the output lights from the plurality of light emitting elements, and the output lights from the plurality of light emitting elements can be detected separately by the light receiving elements. Thus, it is possible to compare those detection signals and improve the detection accuracy. In addition, it is possible to detect the failure of either of them, and the redundancy is improved.

The pressure sensor according to the present invention may further comprise a transmitting-side adapter provided with the sensor unit. Preferably, the transmitting-side adapter is also provided with a membrane or the like that is displaced by receiving fluid pressure.

The pressure sensor according to the present invention may further comprise: a receiving-side adapter capable of being (preferably, detachably or rotatably) attached to the transmitting-side adapter; and a light receiving element attached to the receiving-side adapter to be able to detect an output light radiated from the light emitting element.

Preferably, the light emitting element and the light receiving element face each other in a non-contact state with a predetermined gap only by (detachably) attaching the transmitting-side adapter to the receiving-side adapter, and the light from the light emitting element is radiated to the light receiving element. As long as the light from the light emitting element is radiated to the light receiving element, the positional displacement (including the rotational displacement) is acceptable. The transmitting-side adapter is connected (attached) to the receiving-side adapter only by a rough positioning, and this connection operation is extremely easy. Moreover, this connection operation does not require any operation such as electrical wiring and conduction connection. In addition, no operation such as pairing is necessary.

The receiving-side adapter may comprise a signal processing means for processing a signal detected by the light receiving element. The receiving-side adapter may be attached with a cable connected to, for example, an external control device.

A pressure sensor according to another aspect of the present invention comprises a sensor unit including:
a strain detection unit for detecting a deformation corresponding to pressure;
an electric power supply means for supplying an electric power to the strain detection unit; and
a primary coil capable of changing a magnetic field radiated into space in response to an output signal of the strain detection unit.

In the pressure sensor according to another aspect of the present embodiment, the magnetic field radiated from the primary coil into the space changes corresponding to the output signal of the strain detection unit. The change in the magnetic field is detected with the secondary coil or the like electromagnetically induced and coupled in a non-contact manner, and the output signal detected by the strain detection unit can be thereby easily extracted to the outside. Since the secondary coil is merely disposed in a non-contact manner corresponding to the primary coil, electrical wiring from the sensor unit is unnecessary. Since it is not necessary to use a wireless communication module, a pairing operation or the like is unnecessary, and the connection operation for extracting the output signal from the sensor unit is remarkably easy.

### Brief Description of the Drawings

FIG. 1 is a schematic cross-sectional view of a pressure sensor according to an embodiment of the present invention;
FIG. 2 is an exploded view of the pressure sensor shown in FIG. 1 before assembly;
FIG. 3 is a circuit diagram of the pressure sensor shown in FIG. 1;
FIG. 4 is a graph illustrating a relation between a pressure detected by a strain detection unit shown in FIG. 3 and an illuminance from a light emitting element;
FIG. 5 is a schematic cross-sectional view of a pressure sensor according to another embodiment of the present invention;
FIG. 6 is a schematic cross-sectional view of a pressure sensor according to still another embodiment of the present invention;
FIG. 7 is a circuit diagram of the pressure sensor shown in FIG. 6;
FIG. 8 is a schematic cross-sectional view of a pressure sensor according to still another embodiment of the present invention;
FIG. 9 is a circuit diagram of the pressure sensor shown in FIG. 8;
FIG. 10 is a schematic cross-sectional view of a pressure sensor according to still another embodiment of the present invention;
FIG. 11 is a circuit diagram of the pressure sensor shown in FIG. 10;
FIG. 12 is a schematic cross-sectional view of a pressure sensor according to still another embodiment of the present invention;
FIG. 13 is a cross-sectional view taken along the line XIII-XIII of the pressure sensor shown in FIG. 12;
FIG. 14 is an exploded view of the pressure sensor shown in FIG. 12 before assembly; and
FIG. 15 is a circuit diagram of the pressure sensor shown in FIG. 12.

### Detailed Description of Invention

Hereinafter, the present invention is described based on embodiments shown in the figures.

### First Embodiment

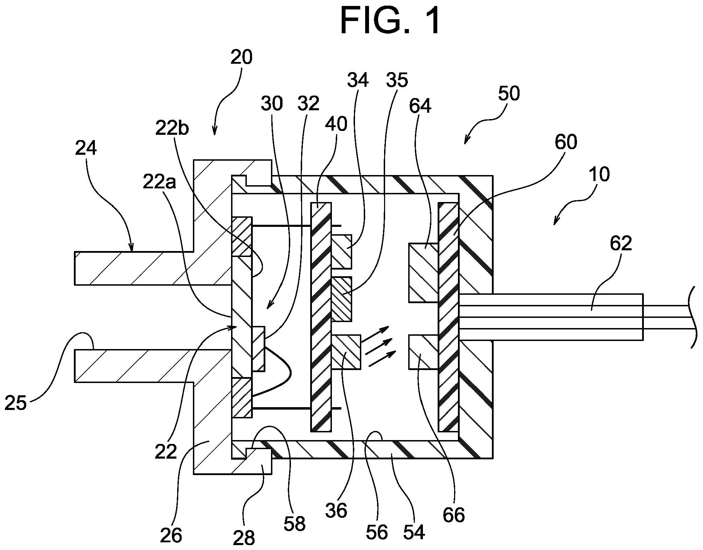

As shown in FIG. 1, a pressure sensor 10 of the present embodiment includes a transmitting-side adapter 20 and a receiving-side adapter 50. The transmitting-side adapter 20 includes a holding member 24 provided with a membrane 22. The holding member 24 includes a hollow pressure introduction flow path 25. A fluid to be measured for its pressure is guided to an inner surface 22a of the membrane 22 via the flow path 25, and the membrane 22 is deformed and distorted by the pressure of the fluid.

In the present embodiment, the membrane 22 is bonded to a holding base 26 of the holding member 24, but may be integrally formed with the holding base 26. The membrane 22 is integrally formed with, for example, a bottom plate of a stem, and the stem may be fixed to the holding member 24. The material of the membrane 22 is not limited, but is made of, for example, a metal such as stainless steel.

A strain detection unit 32 as a part of a sensor unit 30 is closely fixed to an outer surface 22b of the membrane 22 at a location where a strain is generated by fluid pressure. The strain detection unit 32 is not limited as long as it is possible to detect a stress strain of the outer surface 22b based on the pressure applied to the inner surface 22a of the membrane 22. In the present embodiment, for example, the strain detection unit 32 is a strain gauge resistor.

In the present embodiment, the sensor unit 30 includes the strain detection unit 32, a battery 34, a power supply circuit 35, and a light emitting element 36. In the present embodiment, the battery 34 and the power supply circuit 35 correspond to a power supply means for supplying an electric power to the strain detection unit. The battery 34 is not limited and may be a primary battery, a secondary battery, or another battery.

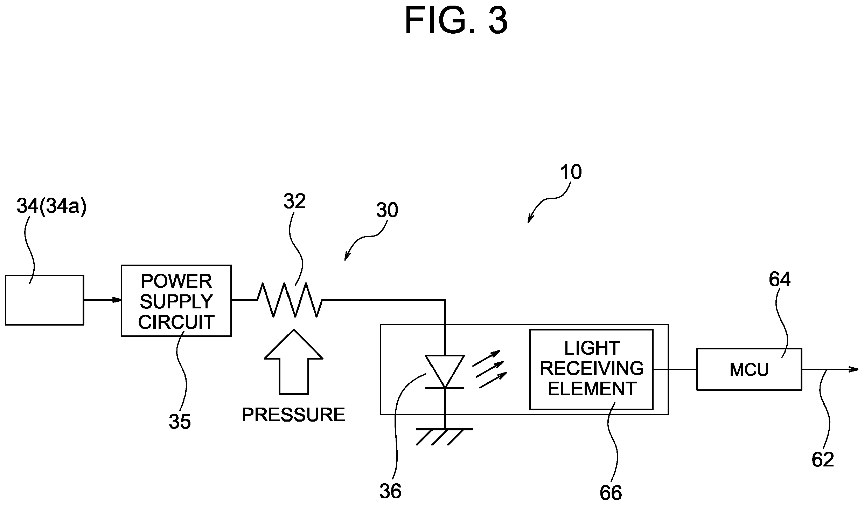

As shown in FIG. 3, the power supply circuit 35 adjusts the voltage or electric current from the battery 34 (including the adjustment of the application timing) so as to adjust the electric power to the strain detection unit 32. The power supply circuit 35 may also have a role of storing electric power.

The light emitting element 36 is connected to the strain detection unit 32 and is configured to emit a light by being applied an electric power (voltage and/or electric current) corresponding to the strain detected by the strain detection unit 32. The illuminance indicating the brightness of the light emitted by the light emitting element 36 corresponds to an output signal detected by the strain detection unit 32 based on the pressure applied to the inner surface 22a of the membrane 22 shown in FIG. 1.

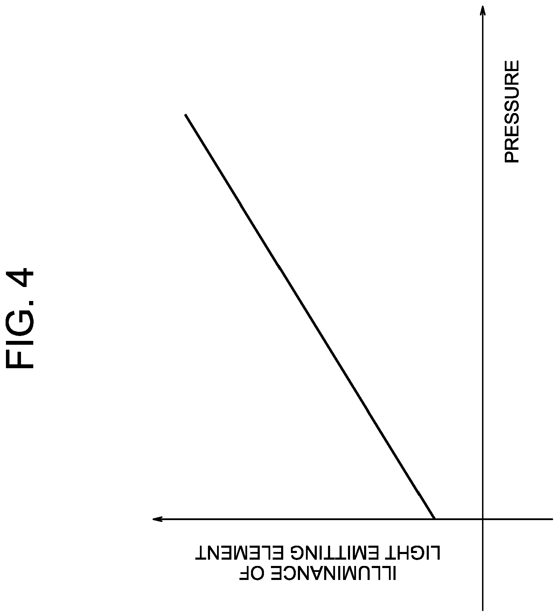

For example, as shown in FIG. 4, the illuminance of light emission by the light emitting element 36 increases in proportion to the pressure applied to the inner surface 22a of the membrane 22 shown in FIG. 1. Thus, the illuminance of the light emitted from the light emitting element 36 is measured by a light receiving element 66 shown in FIG. 3, and the measured signal is subjected to signal processing by a signal processing circuit (signal processing means) 64 or the like, so that the pressure applied to the inner surface 22a of the membrane 22 can be calculated.

The light receiving element 66 and the signal processing circuit 64 are communicably connected to each other, and the output signal from the signal processing circuit 64 can be transmitted to the outside via a cable 62. The output signal from the light receiving element 66 may be directly transmitted to the outside via the cable 62 without using the signal processing circuit 64.

In the present embodiment, the light emitting element 36 is not limited and is, for example, an LED element, an LD element, or the like. As long as the brightness (illuminance) of the light from the light emitting element 36 can be detected, the light receiving element 66 is not limited and is, for example, a phototransistor, a photodiode, an illuminance sensor, a CCD, a camera, or the like. The signal processing circuit 64 is not limited and is, for example, an MCU, an MPU, a CPU, an ASIC, or the like.

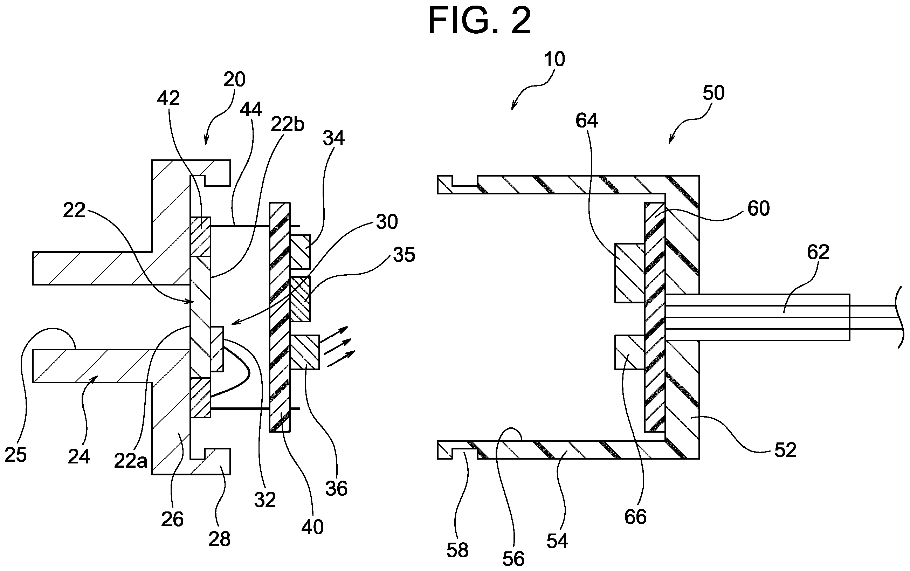

In the present embodiment, as shown in FIG. 2, the battery 34, the power supply circuit 35, and the light emitting element 36 are mounted on a light-emitting-side substrate 40, and the light-emitting-side substrate 40 is disposed so as not to contact with the membrane 22. In the present embodiment, an intermediate substrate 42 is disposed at an outer peripheral position of the membrane 22 with respect to the holding base 26 of the transmitting-side adapter 20, and the light-emitting-side substrate 40 is held by a plurality of wiring wires 44 with one ends fixed to the intermediate substrate 42.

The strain detection unit 32 and the intermediate substrate 42 are electrically connected by wire bonding or the like, the wiring pattern of the intermediate substrate 42 and the wiring wires 44 are electrically connected, and the wiring wires 44 are connected to the wiring pattern of the light-emitting-side substrate 40. As shown in FIG. 3, the wiring pattern of the light-emitting-side substrate 40 connects the battery 34, the power supply circuit 35, the strain detection unit 32, and the light emitting element 36. The wiring pattern of the intermediate substrate 42 and the wiring wires 44 shown in FIG. 2 are a part of the wiring connecting between the power supply circuit 35 and the strain detection unit 32 shown in FIG. 3 and are a part of the wiring connecting between the strain detection unit 32 and the light emitting element 36.

The battery 34 and the power supply circuit 35 may be mounted on the intermediate substrate 42 without being mounted on the light-emitting-side substrate 40. The intermediate substrate 42 and the light-emitting-side substrate 40 may be integrated to eliminate either of them.

The transmitting-side adapter 20 is formed with a convex engagement portion 28 protruding from the holding base 26 so as to surround the membrane 22 and the intermediate substrate 42. A concave engagement portion 58 formed on the outer peripheral surface of the tip of a cover member 54 of the receiving-side adapter 50 engages with the convex engagement portion 28.

The receiving-side adapter 50 includes a light receiving element holding base 52 with a light-light-receiving-side substrate 60 fixed inside. The hollow cylindrical cover member 54 is formed on the outer periphery of the light receiving element holding base 52 so as to extend in the axial direction toward the transmitting-side adapter 20, and an inside 56 of the cover member 54 is open toward the transmitting-side adapter 20. As shown in FIG. 1, since the concave engagement portion 58 of the cover member 54 engages with the convex engagement portion 28 of the transmitting-side adapter 20, the inside 56 of the cover member 54 is light-shielded from the outside, and no light other than the light from the light emitting element 36 enters the light receiving element 66.

That is, preferably, the transmitting-side adapter 20 and the receiving-side adapter 50 are made of a light-shielding member. For example, the transmitting-side adapter 20 is made of a metal from the viewpoint of strength, and the receiving-side adapter 50 is made of a light-shielding resin, a light-shielding ceramic, or the like and preferably has an insulating property.

The signal processing circuit 64 and the light receiving element 66 are fixed to the light-receiving-side substrate 60 and are connected by the wiring pattern of the substrate 60. The cable 62 is connected to the substrate 60 and is connected to, as shown in FIG. 3, the signal processing circuit 64 and the light receiving element 66. The cable 62 is extracted from the inside of the receiving-side adapter 50 to the outside, and no light is inserted from this extracted part into the inside.

The cable 62 is not limited as long as it is a signal line used as the wiring to the outside, and any cable used for electrical wiring or the like can be used. The cable 62 may be a cable for optical communication. The cable 62 may be directly connected to the light receiving element 66. The light receiving element 66 is disposed by being aligned to the light emitting element 36. In the present embodiment, as shown in FIG. 1, the light emitting element 36 and the light receiving element 66 face each other in a combined state of the transmitting-side adapter 20 and the receiving-side adapter 50 and are arranged so as to face each other in a predetermined gap space. The predetermined gap space is not limited, but is preferably about 1.6 to 3.2 mm.

In the pressure sensor 10 according to the present embodiment, the output of the light radiated from the light emitting element 36 into the space changes in response to the output signal of the strain detection unit 32. Since the change in the output of the light (e.g., the change in illuminance) is detected by the light receiving element 66, the output signal detected by the strain detection unit 32 can be easily extracted to the outside via the cable 62.

In the present embodiment, since the light receiving element 66 is merely disposed corresponding to the light emitting element 36, the electrical wiring from the sensor unit 30 to the cable 62 is unnecessary. Moreover, since it is unnecessary to use a wireless communication module, no pairing operation or the like is also necessary, and the operation for connecting the adapters 20 and 50 is remarkably easy due to extraction of the output signal from the sensor unit 30 to the cable 62.

In the present embodiment, the concave engagement portion 58 of the receiving-side adapter 50 merely engages with the convex engagement portion 28 of the transmitting-side adapter 20. After the concave engagement portion 58 of the receiving-side adapter 50 engages with the convex engagement portion 28 of the transmitting-side adapter 20, they may be joined using an adhesive. In the present embodiment, the transmitting-side adapter 20 is provided with the convex engagement portion 28, and the receiving-side adapter 50 is provided with the concave engagement portion 58, but the reverse is also possible. That is, the transmitting-side adapter 20 may be provided with the concave engagement portion 58, and the receiving-side adapter 50 may be provided with the convex engagement portion 28.

In the present embodiment, the cover member 54 is provided on the receiving-side adapter 50, but may be provided on the transmitting-side adapter 20. Instead, the cover member 54 may be provided on each of the adapters 20 and 50, and they may be connected by engagement or the like.

In the present embodiment, the adapters 20 and 50 are connected by concave and convex engagement, but they may be connected by other connection means, such as screw coupling, bonding by adhesion, and bonding by welding. When the receiving-side adapter 50 is detachably attached to the transmitting-side adapter 20 in an engagement manner, it is easy to maintain the internal parts of the adapters.

In the present embodiment, the light emitting element 36 and the light receiving element 66 face each other in a non-contact state with a predetermined gap only by (detachably) attaching the transmitting-side adapter 20 to the receiving-side adapter 50, and the light from the light emitting element 36 is radiated to the light receiving element 66. As long as the light from the light emitting element 36 is radiated to the light receiving element 66, a slight positional displacement is acceptable. The transmitting-side adapter 20 is connected (attached) to the receiving-side adapter 50 only by a rough positioning, and this connection operation is extremely easy. Moreover, this connection operation does not require any operation such as electrical wiring and conduction connection. In addition, no operation such as pairing is necessary.

### Second Embodiment

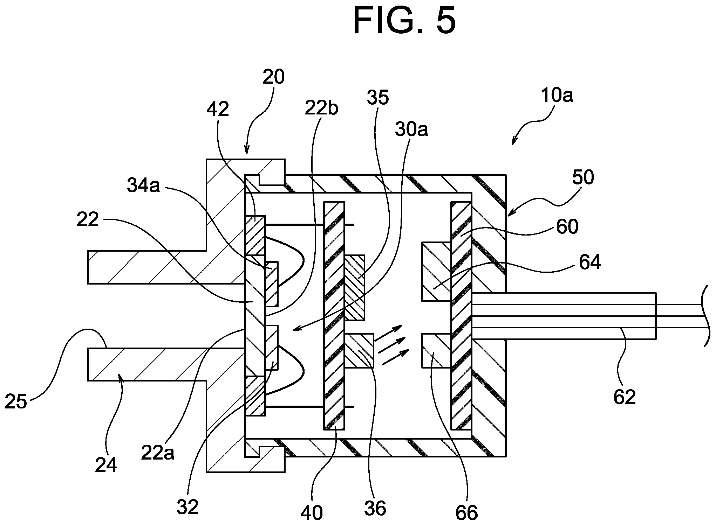

As shown in FIG. 5, a pressure sensor 10a according to the present embodiment is different from that in First Embodiment only in terms of the configurations and effects of a sensor unit 30a, and the other configurations and effects are similar to those in First Embodiment. The common respects are not described.

In the present embodiment, as shown in FIG. 5, the sensor unit 30a includes a piezoelectric element 34a instead of the battery 34 of First Embodiment. The piezoelectric element 34a is attached to the outer surface 22b of the membrane 22 together with the strain detection portion 32, but the attachment position is not limited as long as a deformation of the membrane 22 is also transmitted to the piezoelectric element 34a. The piezoelectric element 34a is deformed by a strain deformation based on the pressure applied to the membrane 22, and the electric power generated by this can be supplied to the strain detection unit 32. The circuit diagram of the pressure sensor 10a of the present embodiment is similar to the circuit diagram shown in FIG. 3.

In the pressure sensor 10a of the present embodiment, an electromotive force due to the deformation of the element 34a is generated in the piezoelectric element 34a at the timing when the strain detection unit 32 detects a deformation based on the pressure applied to the membrane 22, and an electric power is supplied from the piezoelectric element 34a to the strain detection unit 32. As a result, low power consumption becomes possible.

### Third Embodiment

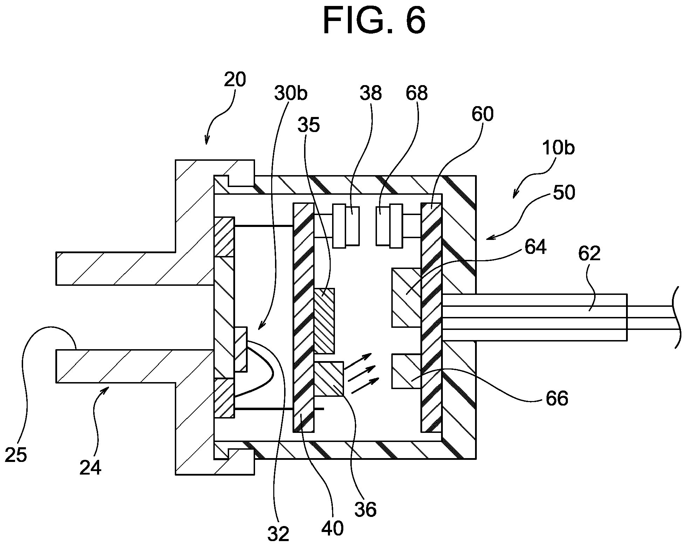

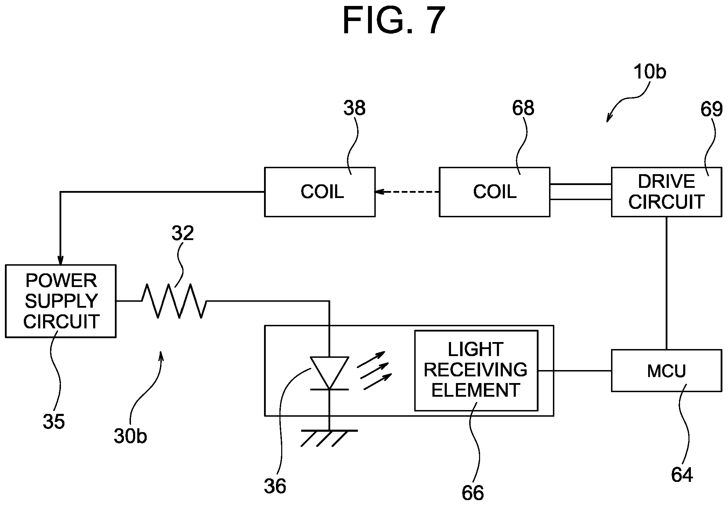

As shown in FIG. 6 and FIG. 7, a pressure sensor 10b according to the present embodiment is different from that in First Embodiment or Second Embodiment only in terms of the configurations and effects of a sensor unit 30b and the configurations and effects of components mounted on the receiving-side adapter 50, and the other configurations and effects are similar to those in First Embodiment or Second Embodiment. The common respects are not described.

In the present embodiment, as shown in FIG. 6 and FIG. 7, the sensor unit 30b includes a non-contact power receiving coil 38 instead of the battery 34 of First Embodiment. The non-contact power receiving coil 38 is attached to the light-emitting-side substrate 40 and connected to the power supply circuit 35.

A non-contact power feeding coil 68 is mounted on the light-receiving-side substrate 60 so as to face the non-contact power receiving coil 38 at a predetermined interval. The non-contact power feeding coil 68 is driven by a drive circuit 69 shown in FIG. 7. The drive circuit 69 may be controlled by, for example, the signal processing circuit 64 or may be controlled by a control device or the like connected to the cable 62. The drive circuit 69 may be incorporated in the signal processing circuit 64 or may be incorporated in a control device or the like connected to the cable 62.

An electric power can be supplied from an external power source (not shown) to the drive circuit 69. The electric power from the external power source may be supplied to the power feeding coil 68 via the cable 62. The power feeding coil 68 is electromagnetically coupled to the power receiving coil 38 in a non-contact manner, an electric power is supplied from the power feeding coil 68 to the power receiving coil 38, and the electric power supplied to the power receiving coil 38 is adjusted by the power supply circuit 35 and can be supplied to the strain detection unit 32 at a required timing.

In the present embodiment, the power supply circuit 35 may further include a power storage element and a switching circuit (switching means) for selecting a power source for storing an electric power in the power storage element. In that case, the electric power stored in the power storage element of the power supply circuit 35 can be supplied to the strain detection unit 32. The power storage element is not limited and is, for example, a capacitor, a secondary battery, or the like.

### Fourth Embodiment

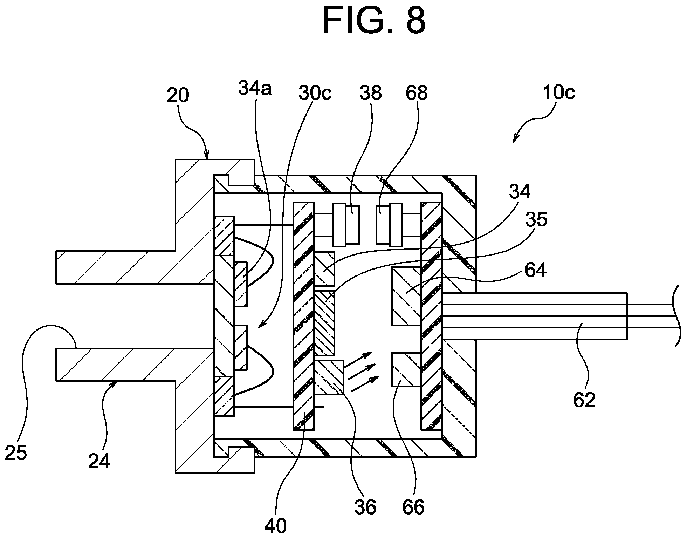

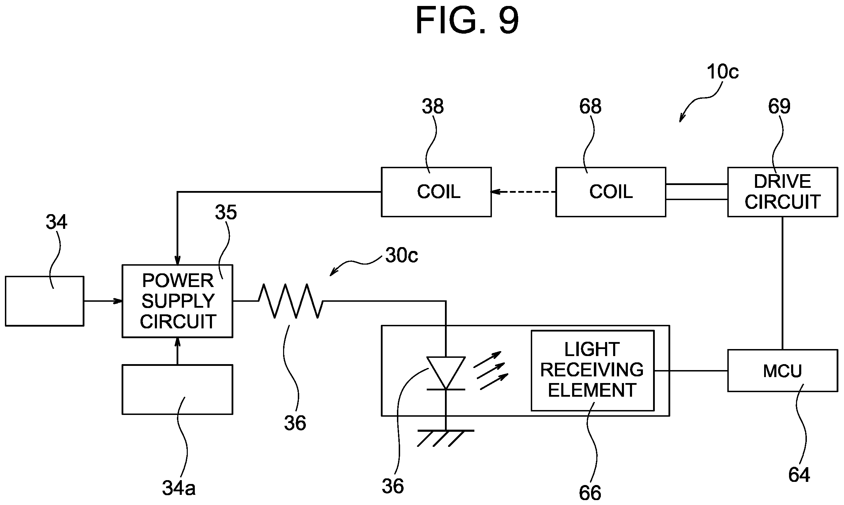

As shown in FIG. 8 and FIG. 9, a pressure sensor 10c according to the present embodiment is different from that in First Embodiment to Third Embodiment only in terms of the configurations and effects of a sensor unit 30c and the configurations and effects of components mounted on the receiving-side adapter 50, and the other configurations and effects are similar to those in First Embodiment to Third Embodiment. The common respects are not described.

In the present embodiment, as shown in FIG. 8 and FIG. 9, the sensor unit 30c includes the piezoelectric element 34a and the non-contact power receiving coil 38 together with the battery 34 of First Embodiment. The non-contact power receiving coil 38 is attached to the light-emitting-side substrate 40 and connected to the power supply circuit 35.

The non-contact power feeding coil 68 is mounted on the light-receiving-side substrate 60 so as to face the non-contact power receiving coil 38 at a predetermined interval. The non-contact power feeding coil 68 is driven by the drive circuit 69 shown in FIG. 9. The drive circuit 69 may be controlled by, for example, the signal processing circuit 64 or may be controlled by a control device or the like connected to the cable 62. The drive circuit 69 may be incorporated in the signal processing circuit 64 or may be incorporated in a control device or the like connected to the cable 62.

An electric power can be supplied from an external power source (not shown) to the drive circuit 69. The electric power from the external power source may be supplied to the power feeding coil 68 via the cable 62. The power feeding coil 68 is electromagnetically coupled to the power receiving coil 38 in a non-contact manner, an electric power is supplied from the power feeding coil 68 to the power receiving coil 38, and the electric power supplied to the power receiving coil 38 is adjusted by the power supply circuit 35 and can be supplied to the strain detection unit 32 at a required timing.

In the present embodiment, the power supply circuit 35 may further include a power storage element and a switching circuit (switching means) for selecting a power source for storing an electric power in the power storage element. In that case, the electric power stored in the power storage element of the power supply circuit 35 can be supplied to the strain detection unit 32.

When the switching circuit of the power supply circuit 35 is used, for example, various electric power generation elements (e.g., the piezoelectric element 34a or a photovoltaic element) can be used as a backup power source for the battery 34. For example, the strain detection unit 32 may be operated by the piezoelectric element 34a as an energy harvesting element during normal operation, and the strain detection unit 32 may be operated by switching to the battery 34 or a wireless power supply (power supply between the coils 38 and 68) during insufficient power generation.

### Fifth Embodiment

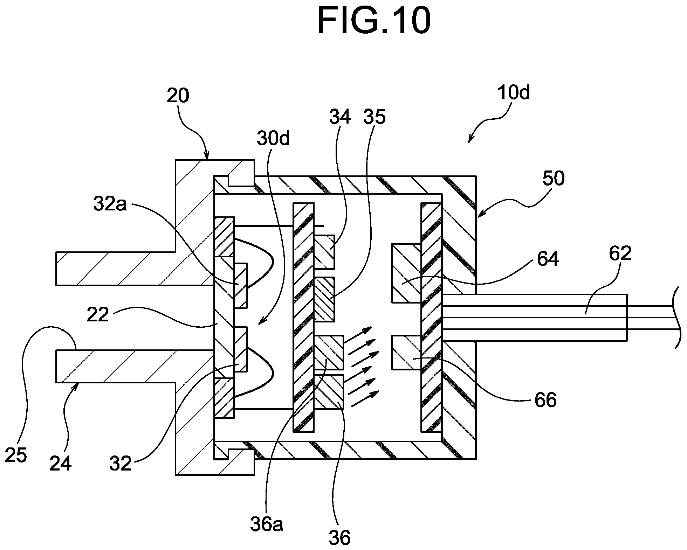

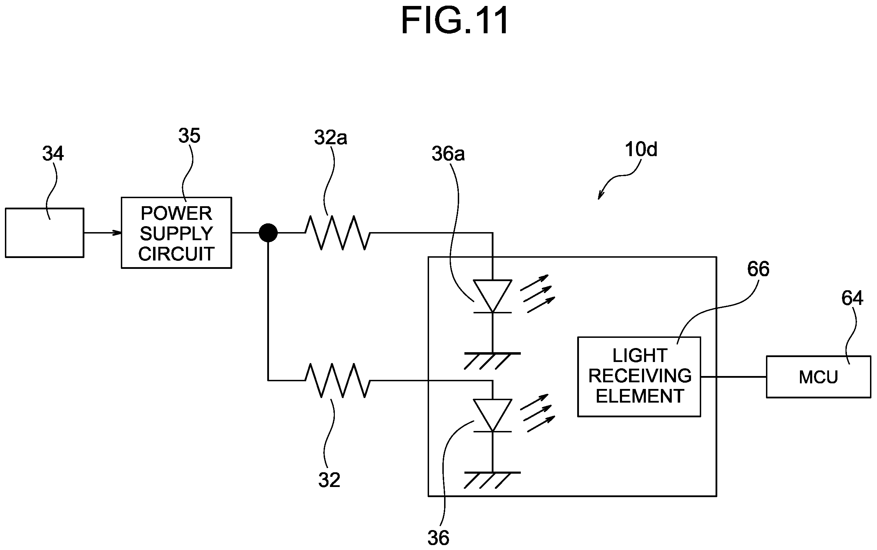

As shown in FIG. 10 and FIG. 11, a pressure sensor 10d according to the present embodiment is different from that in First Embodiment to Fourth Embodiment only in terms of the configurations and effects of a sensor unit 30d, and the other configurations and effects are similar to those in First Embodiment to Fourth Embodiment. The common respects are not described.

In the present embodiment, as shown in FIG. 10 and FIG. 11, the sensor unit 30d includes at least one auxiliary strain detection unit 32a disposed together with the strain detection unit 32 of First Embodiment. The sensor unit 30d includes at least one auxiliary light emitting element 36a together with the light emitting element 36. The auxiliary strain detection unit 32a has a configuration similar to that of the strain detection unit 32b, but does not necessarily have the same configuration. The auxiliary strain detection unit 32a is attached to the membrane 22 together with the strain detection unit 32, but the disposition position is not limited as long as a strain similar to that of the strain detection unit 32 is detected. The strain detection unit 32 and the auxiliary strain detection unit 32a may be formed on the outer surface 22b of the membrane 22 by a thin film method and laminated via an insulating layer.

The strain detection unit 32 is connected to the power supply circuit 35 and the light emitting element 36, and the auxiliary strain detection unit 32a is connected to the power supply circuit 35 and the auxiliary light emitting element 36a. The auxiliary light emitting element 36a has a configuration similar to that of the light emitting element 36, but does not necessarily have the same configuration. In the present embodiment, a single light receiving element 66 faces both of the auxiliary light emitting element 36a and the light emitting element 36 and can receive the lights from both of them, but a plurality of light receiving elements 66 may be arranged on the receiving-side adapter 50 so as to face the respective light emitting elements 36 and 36a.

In the present embodiment, the detection accuracy for pressure is improved by detecting the strain (deformation) using the plurality of strain detection units 32 and 32a. Instead, the detection range can also be expanded by detecting the strain (deformation) using the plurality of strain detection units 32 and 32a.

### Sixth Embodiment

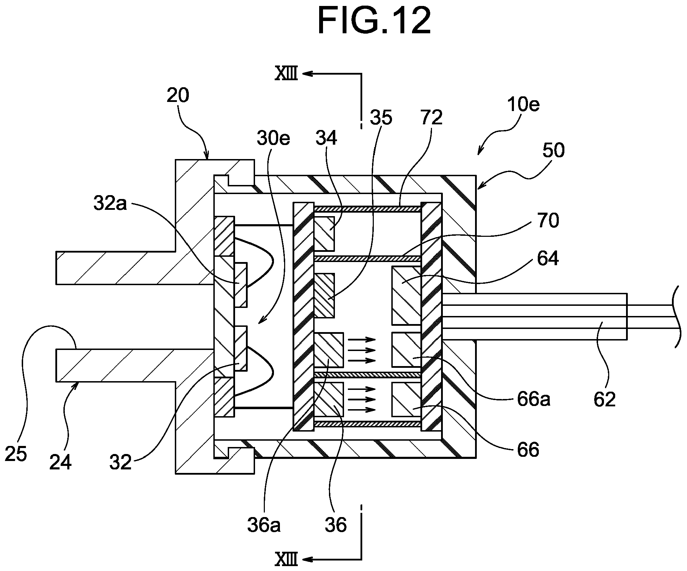

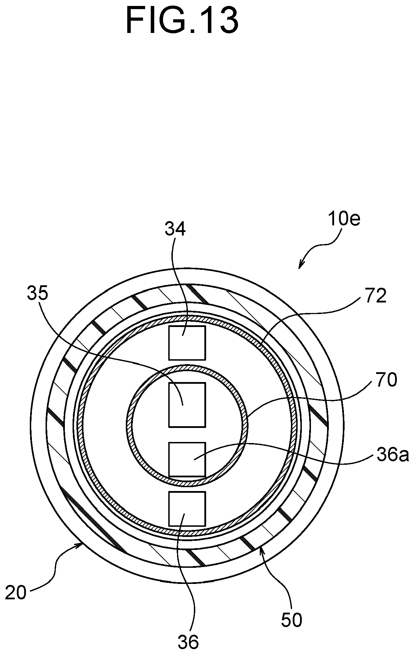

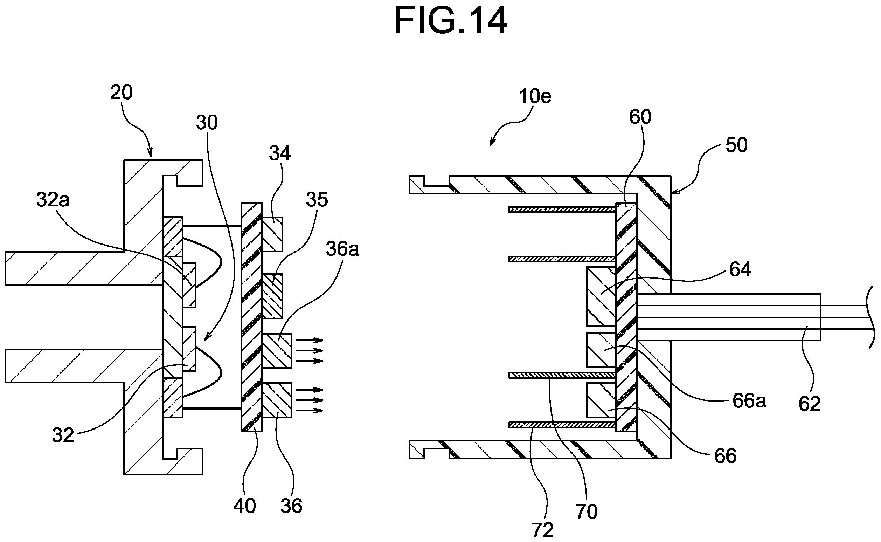

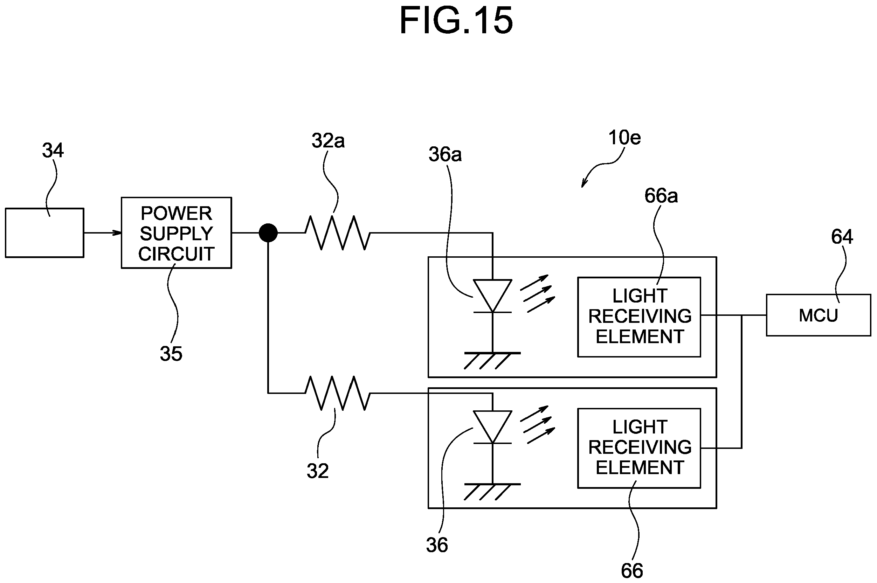

As shown in FIG. 12 to FIG. 15, a pressure sensor 10e according to the present embodiment is different from that in Fifth Embodiment only in terms of the configurations and effects of a sensor unit 30e, and the other configurations and effects are similar to those in Fifth Embodiment. The common respects are not described.

In the present embodiment, as shown in FIG. 12 to FIG. 15, the sensor unit 30e includes at least one auxiliary strain detection unit 32a disposed together with the strain detection unit 32. The sensor unit 30e includes at least one auxiliary light emitting element 36a together with the light emitting element 36.

The strain detection unit 32 is connected to the power supply circuit 35 and the light emitting element 36, and the auxiliary strain detection unit 32a is connected to the power supply circuit 35 and the auxiliary light emitting element 36a. The auxiliary light emitting element 36a has a configuration similar to that of the light emitting element 36, but does not necessarily have the same configuration. In the present embodiment, the receiving-side adapter 50 is equipped with two hollow cylindrical partition walls 70 and 72 having different diameters.

As shown in FIG. 12, the partition wall 70 is disposed between the light emitting element 36 and the auxiliary light emitting element 36a in a combined state of the adapters 20 and 50 and prevents mutual interference of the lights emitted from the elements 36 and 36a. The partition wall 70 is also located between the light receiving element 66 and the auxiliary light receiving element 66a and is configured so that the lights entering the light receiving element 66 and the auxiliary light receiving element 66a, respectively, do not interfere with each other.

In the present embodiment, the light emitting element 36 and the light receiving element 66 are arranged so as to face each other, and the auxiliary light emitting element 36a and the auxiliary light receiving element 66a are arranged so as to face each other. The hollow cylindrical partition wall 72 having a diameter larger than that of the partition wall 70 surrounds the light emitting element 36 so that the light from the light emitting element 36 does not leak to the outside.

In the present embodiment, the two partition walls 70 and 72 are both mounted on the substrate 60 of the receiving-side adapter 50, but at least one of the partition walls 70 and 72 may be mounted on the substrate 40 of the transmitting-side adapter 20. The partition walls 70 and 72 are made of light-shielding members.

In the present embodiment, the detection accuracy for pressure is improved by detecting the strain (deformation) using the plurality of strain detection units 32 and 32a. Instead, the detection range can be expanded by detecting the strain (deformation) using the plurality of strain detection units 32 and 32a.

Since at least the partition wall 70 is provided, it is possible to prevent the interference of the output lights from the plurality of light emitting elements 36 and 36a, and the output lights from the plurality of light emitting elements 36 and 36a can be detected separately by the light receiving elements 66 and 66a. Thus, it is possible to compare those detection signals and improve the detection accuracy. In addition, it is possible to detect the failure of either of them, and the redundancy is improved.

In the present embodiment, since the partition walls 70 and 72 are formed with a hollow cylindrical shape, even if one adapter 50 rotates relative to the other adapter 20, the output lights from the plurality of light emitting elements 36 and 36a can be detected separately by the light receiving elements 66 and 66a while preventing the interference of the output lights. Thus, even if one adapter 50 is relatively rotatably engaged with the other adapter 20, the signal lines, such as the cable 62, are not twisted and can be used for applications, such as a robot arm and a surveillance camera.

### Seventh Embodiment

Although not illustrated, the pressure sensor of the present embodiment is a modification of the pressure sensor 10b shown in FIG. 6 and FIG. 7. The common respects are not described.

Instead of the optical sensor 36, the pressure sensor of the present embodiment includes a primary coil for changing the magnetic field radiated into the space in response to the output signal of the strain detection unit 32. Moreover, instead of the light receiving element 66, the pressure sensor of the present embodiment includes a secondary coil facing the primary coil in a non-contact manner. The secondary coil is connected to the signal processing circuit 64 or the like.

In the pressure sensor of the present embodiment, the magnetic field radiated from the primary coil into the space changes corresponding to the output signal of the strain detection unit 32. The change in the magnetic field is detected with the secondary coil or the like electromagnetically induced and coupled in a non-contact manner, and the output signal detected by the strain detection unit can be thereby easily extracted to the outside. Since the secondary coil is merely disposed in a non-contact manner corresponding to the primary coil, electrical wiring from the sensor unit is unnecessary. Since it is unnecessary to use a wireless communication module, a pairing operation or the like is unnecessary, and the connection operation for extracting the output signal from the sensor unit is remarkably easy.

In the present embodiment, the non-contact power receiving coil 38 can also function as the primary coil. Moreover, the non-contact feeding coil 68 can also function as the secondary coil. In that case, the primary coil and the secondary coil corresponding to the light emitting element 36 and the light receiving element 66 can also be omitted.

The present invention is not limited to the above-mentioned embodiments and can be variously modified within the scope of the present invention.

### Explanation of References

- 10, 10a-10e...: pressure sensor
- 20...: transmitting-side adapter
- 22...: membrane
22a... inner surface
22b... outer surface
- 24...: holding member
- 25...: pressure introduction flow path
- 26...: holding base
- 28...: convex engagement portion
- 30, 30a-30e...: sensor unit
- 32...: strain detection unit
32a... auxiliary strain detection unit
- 34...: battery
34a... piezoelectric element
- 35...: power supply circuit
- 36...: light emitting element
36a... auxiliary light emitting element
- 38...: non-contact power receiving coil
- 40...: light-emitting-side substrate
- 42...: intermediate substrate
- 44...: wiring wire
- 50...: receiving-side adapter
- 52...: light receiving element holding base
- 54...: cover member
- 56...: inside
- 58...: concave engagement portion
- 60...: light-receiving-side substrate
- 62...: cable
- 64...: signal processing circuit (signal processing means)
- 66...: light receiving element
66a... auxiliary light receiving element
- 68...: non-contact power feeding coil
- 69...: drive circuit
- 70, 72 ...: partition wall

## Claims

1. A pressure sensor comprising a sensor unit including:
a strain detection unit for detecting a deformation corresponding to pressure;
an electric power supply means for supplying an electric power to the strain detection unit; and
a light emitting element capable of changing an output of a light radiated into space in response to an output signal of the strain detection unit.

2. The pressure sensor according to claim 1, wherein
the electric power supply means includes a piezoelectric element, and
the piezoelectric element is attached together with the strain detection unit to be able to supply an electric power generated by the deformation corresponding to pressure to the strain detection unit.

3. The pressure sensor according to claim 1 or 2, wherein
the electric power supply means includes a non-contact power receiving coil, and
the non-contact power receiving coil is constructed to receive an electric power and supply the electric power to the strain detection unit.

4. The pressure sensor according to any of claims 1 to 3, wherein
the electric power supply means further includes:
a power storage element; and
a switching means for selecting a power source for storing an electric power in the power storage element, and
the power storage element is constructed to supply the electric power stored therein to the strain detection unit.

5. The pressure sensor according to any of claims 1 to 4, further comprising:
an auxiliary strain detection unit disposed together with the strain detection unit; and
an auxiliary light emitting element capable of changing an output of a light radiated into space in response to an output signal of the auxiliary strain detection unit.

6. The pressure sensor according to claim 5, further comprising a partition wall disposed between the light emitting element and the auxiliary light emitting element.

7. The pressure sensor according to any of claims 1 to 6, further comprising a transmitting-side adapter provided with the sensor unit.

8. The pressure sensor according to claim 7, further comprising:
a receiving-side adapter capable of being attached to the transmitting-side adapter; and
a light receiving element attached to the receiving-side adapter to be able to detect an output light radiated from the light emitting element.

9. The pressure sensor according to claim 8, wherein the receiving-side adapter comprises a signal processing means for processing a signal detected by the light receiving element.

10. A pressure sensor comprising a sensor unit including:
a strain detection unit for detecting a deformation corresponding to pressure;
an electric power supply means for supplying an electric power to the strain detection unit; and
a primary coil capable of changing a magnetic field radiated into space in response to an output signal of the strain detection unit.
